# Europäisches Patentamt

## European Patent Office

## Office européen des brevets

(19)

(11) Veröffentlichungsnummer: **0 081 255**
**B1**

(12) **EUROPÄISCHE PATENTSCHRIFT**

(45) Veröffentlichungstag der Patentschrift:
**05.07.89**

(51) Int. Cl.⁴: **F 01 D  17/14,** F 02 C  6/12,
F 02 B  37/12

(21) Anmeldenummer: **82201447.8**

(22) Anmeldetag: **16.11.82**

(54) Regulierbarer Abgasturbolader.

(30) Priorität: **09.12.81  CH 7858/81**

(43) Veröffentlichungstag der Anmeldung:
**15.06.83 Patentblatt 83/24**

(45) Bekanntmachung des Hinweises auf die Patenterteilung:
**05.07.89 Patentblatt 89/27**

(84) Benannte Vertragsstaaten:
**CH DE FR GB LI**

(56) Entgegenhaltungen:
**EP-A- 0 034 915**
**CH-A- 428 775**
**FR-A- 1 254 037**
**FR-A- 2 439 299**
**GB-A- 1 146 575**
**GB-A- 1 554 074**
**GB-A- 2 057 063**
**US-A- 2 916 198**
**US-A- 3 071 345**
**US-A- 3 075 742**
**US-A- 3 160 392**
**US-A- 3 355 878**
**US-A- 3 784 318**
**US-A- 3 975 911**
**US-A- 4 292 807**

**SOVIET INVENTIONS ILLUSTRATED, September 1971,
Section B, Seite 18**

(73) Patentinhaber: **BBC Brown Boveri AG, Haselstrasse,
CH-5401 Baden (CH)**

(72) Erfinder: **Moser, Peter, Dipl.-Ing., Weidgangstrasse 6,
CH-8113 Boppelsen (CH)**

**Beschreibung**

Die Erfindung betrifft einen regulierbaren Abgasturbolader nach dem Oberbegriff des Patentanspruchs 1.

Anstelle eines Leitapparates verwendet man vor der Laufradbeschaufelung oft, insbesondere bei kleineren Turbinen, beispielsweise für Abgasturbolader von Fahrzeugmotoren, einen spiralförmigen Eintrittskanal, da ein solches Turbinengehäuse ohne Leitapparat billiger herzustellen ist.

Das Drehmoment einer normalen Laderturbine mit konstantem, nichtverstellbarem Zuströmquerschnitt des Eintrittskanals sinkt bei Durchsätzen unterhalb des Nenndurchsatzes, für den die Turbine ausgelegt ist, stark ab. Bestimmend für die notwendige Tangentialkomponente der Strömungsgeschwindigkeit am Radeintritt sind bei einem gegebenen Durchsatz der engste Zuströmquerschnitt am Anfag des spiralförmigen Teiles des Eintrittskanals und seine radiale Lage, bezogen auf den Eintrittsdurchmesser des Laufrades. Um im Teillastbereich bei variierendem Abgasstrom annehmbare Turbinenleistungen zu erhalten, sind Vorschläge zur Änderung dieser geometrischen Daten gemacht worden, die generell darin bestehen, durch bewegliche Wände das Volumen des Eintrittsspiralenraumes entsprechend dem variablen Abgasstrom zu verändern.

Die ASME-Publikation «Aerodynamic Design of Fixed and Variable Geometry Nozzleless Turbine Casings» beschreibt die Möglichkeit, durch eine axial verschiebbare Wand den Eintrittsspiralenraum entsprechend dem Abgasdurchsatz zu verändern. Gegenüber der Gehäuseinnenwand wird dabei ein Spiel in Kauf genommen. Diese Lösung ist in diesem Aufsatz nur schematisch ohne irgendwelche Angaben über die Verstellorgane und die konstruktive Ausbildung gezeigt.

Eine andere, konstruktiv sehr aufwendige Lösung mit grossen Leckströmungsverlusten ist in der US-PS-2 916 198 beschrieben. Das Volumen des wirksamen Eintrittsspiralenraumes kann dabei von zwei einander gegenüberliegenden, halbmondförmigen Klappen verändert werden, die um zwei etwa tangential zum Spiralenumfang liegende Achsen schwenkbar sind. Die Betätigung der Klappen erfolgt durch ein außerhalb des Gehäuses befindliches Gestänge. Es ist dabei nicht möglich, auf einfache Weise den Abgasdruck zur Verstellung der Klappen heraunzuziehen.

In der DE-A-2 934 041 wird eine Einrichtung zur Lösung der gegenständlichen Aufgabe beschrieben, bei der der Einlauf in den Spiralenraum in mehrere Fluten unterteilt ist, deren Querschnitte u. a. durch von außen in axialer Richtung verschiebbare Wände veränderbar sind. Varianten dieser Einrichtung weisen Verschlußglieder in diesen Fluten auf, deren Öffnungsgrad dem Abgasstrom angepaßt werden kann. Diese Lösungen befriedigen bei Teilöffnung der Verschlußglieder nicht.

Bei einem aus der SU-A-280 097 bekannten Abgasturbolader ist zur Regelung des Abgasdurchsatzes im Eintrittsspiralenraum ein scheibenförmiger Regelkörper vorgesehen, dessen Verschiebung durch einen davon räumlich getrennten Ringkolben erfolgt. Dieser ist mit dem Regelkörper durch Führungsstangen verbunden, die in einer Zwischenwand verschieblich gelagert sind. Der Ringkolben ist im schließenden Sinne des Regelkörpers federbelastet, die Öffnungsbewegung bewirkt der auf den Ringkolben ausgeübte Druck der Abgase. Nachteilig ist bei dieser Einrichtung der große Raumbedarf, ihr vielgliedriger Aufbau und eine Störanfälligkeit als Folge der Beaufschlagung der Verstellglieder durch das Abgas.

Die GB-A-1 554 074 beschreibt eine Einrichtung zur Regelung des Abgasdurchsatzes für eine Turboladerturbine mit einem zweiflutigen Eintrittsgehäuse. Für die Einschnürung des Zuflußquerschnitts dienen zwei koaxiale, zur Laufradachse parallel verschiebliche Hülsen, deren äußere unabhängig von der inneren die Änderung des Zuflußquerschnitts vor dem Laufradšintritt bewirkt, wogegen sie im Zusammenwirken mit der inneren Hülse den Zuflußquerschnitt so weit freigeben kann, daß ein Teil desselben am Laufrad vorbeiströmt, ohne Arbeit zu leisten und somit als Wastegate fungiert. Zum Verschieben der Hülsen dienen von der Ladeluft beaufschlagte, scheibenförmige, federbelastete Ringkolben. Bezüglich Störanfälligkeit gilt wegen der verhältnismässig engen Spiele zwischen den beiden Hülsen vermutlich dasselbe wie beim vorhergehend besprochenen Patent.

Ferner wäre als zum Stand der Technik gehörend die FR-A-2 439 299 zu erwähnen, die eine Einrichtung beschreibt, bei der ebenfalls im Eintrittsspiralenraum ein Scheibenkolben zwecks Veränderung des Zuflußquerschnitts vor dem Laufrad angeordnet ist. Für das Verschieben des Scheibenkolbens kann irgendeine im Turbolader auftretende Druckdifferenz gegenüber dem Abgasdruck vor dem Laufrad benutzt werden. Die Beschreibung gibt aber keine Anhaltspunkte dafür, wie diese Einrichtung auszuführen ist, damit sie den praktisch auftretenden Betriebszuständen genügt.

Zwei weitere Bauarten von abgasseitig regulierbaren Abgasturboladern sind in der GB-A-1 146 575 und in der EP-A-34 915 beschrieben. In beiden Fällen bilden kreisringzylindrische Regelkörper die verstellbare Wand zur Anpassung des Strömungsquerschnittes an den jeweiligen Abgasstrom. Beim erstgenannten Patent ist auch für den dem Eintrittsraum vorgeschalteten divergenten oder konvergenten Kanal ein verschiebbarer, kreisringzylindrischer Regelkörper vorgesehen, der sowohl allein als auch gleichzeitig mit dem Regelkörper für den Eintrittsraum, jeweils unabhängig voneinander, verschoben werden kann. Bei beiden Bauarten nach den zwei letztgenannten Patentschriften haben die kreisringzylindrischen Regelkörper den Nachteil, dass sie in einem zu ihnen koaxialen kreisringzylindrischen Eintrittsraum arbeiten, dadurch keine Verjüngung der Strömungsquerschnitte in der Durchströmungsrichtung jedes Eintrittsraumes aufweisen, so daß das Turbinenlaufrad auf seinem Umfang ungleichmäßig beaufschlagt wird. Beim zweitgenannten Patent weist die Stirnseite des verschiebbaren Regelkörpers Leitschaufeln auf, die zwischen Leitschaufeln eines feststehenden Leitschaufelkranzes eingeschoben werden können. Die verstellbaren Leitschaufeln begrenzen mit den feststehenden im Betrieb mehr oder weniger lange Leitschaufelkanäle.

Die vorliegende, im kennzeichnenden Teil des Anspruchs 1 definierte Erfindung entstand aus der Aufgabe, unter Vermeidung der Nachteile der bekannten Lösungen eine praktisch brauchbare Ausführung eines regulierbaren Turboladers zu schaffen, bei dem die für den praktischen Betrieb einer Motorenanlage erforderlichen Steuerhilfseinrichtungen, nämlich das Wastegate und Bypasskanäle, die beim heutigen Stand der Technik außerhalb des Turboladers vorgesehen sind, in die Laderturbine einbezogen ist, derart, daß ein Regelkolben in einfacher Weise das Öffnen, Schließen und Anpassen der Kanalquerschnitte für den Abfluß des überschüssigen Abgases aus dem bzw. das Zuströmen von Verdichterluft in den Eintrittsraum vor der Turbine steuert. Dadurch entfallen die Leitungen und Armaturen, die bei einer Anordnung der besagten Kanäle außerhalb des Turboladergehäuses erforderlich sind, und man spart Platz bei beengtem Einbauraum für den Motor, besonders bei Fahrzeugen.

Die Erfindung wird im folgenden unter Bezugnahme auf in den Zeichnungen schematisch dargestellte Ausführungsbeispielen näher beschrieben. In der Zeichnung stellen dar:

Fig. 1 die Grundform einer Radialturbine eines erfindungsgemäßen Abgasturboladers mit integriertem Wastegate,

Fig. 2 das Schema eines Turboladers mit einem Bypass zwischen Verdichter und Turbine,

Fig. 3 einen Aufriß des Regelkolbens,

Fig. 4 einen Ausschnitt aus der Darstellung von Fig. 3 in der Draufsicht, geschnitten nach dem in Fig. 3 eingezeichneten Schnittverlauf V–V, und

Fig. 5 eine axonometrische Darstellung der Grundform eines Regelkolbens und der Begrenzung der Eintrittsspirale.

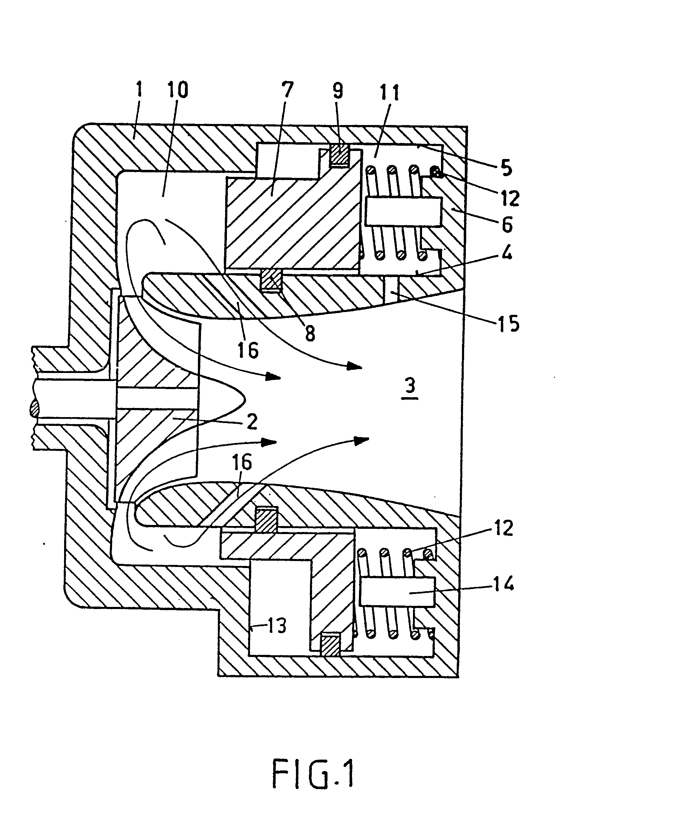

In Fig. 1 ist das Turbinengehäuse eines Abgasturboladers mit 1 bezeichnet. Das Laufrad 2 ist teilweise von einem Auslaßdiffusor 3 mit einer kreiszylindrischen Außenmantelfläche 4 umgeben. Konzentrisch hiezu weist das Turbinengehäuse 1 eine kreiszylindrische Bohrung 5 auf und der kreiszylindrische Raum zwischen den Flächen dieser Bohrung 5 und der Mantelfläche 4 ist am Auslaßende des Diffusors 3 durch einen Zylinderboden 6 abgeschlossen. Außerdem nimmt dieser kreiszylindrische Raum einen Regelkolben 7 auf, dessen genaue Form und Funktion unten beschrieben werden. Er ist gegenüber den Flächen 4 und 5 durch einen inneren, in einer Nut des Diffusors 3 sitzenden Kolbenring 8 und einen äußeren, in einer Nut des Kolbens 7 befindlichen Kolbenring 9 abgedichtet. Der Kolben 7 trennt auf diese Weise den Eintrittsspiralenraum 10 von einem hinteren Zylinderraum 11. Die voll ausgezogene Stellung des Kolbens ist jene, bei der der Eintrittsspiralenraum ein Maximum ist, während er in der linken, nicht eingezeichneten Stellung für das Abgas das kleinste Volumen zur Verfügung stellt.

Der Kolben 7 ist durch eine Reihe von am Umfang verteilten Schraubendruckfedern 12 belastet, die ihn in die Stellung des minimalen Spiralenraumvolumens drücken, bei der der Kolben an der ebenen Stirnfläche 13 des Zylinderraums anliegt. Zu den Federn 12 konzentrische Anschlagbolzen 14 begrenzen eine Verschiebung des Kolbens 7 in der Durchflussrichtung der Turbine. Der hintere Zylinderraum 11 steht mit dem Diffusorraum über mindestens eine Ausgleichsbohrung 15 in Verbindung.

Bei dieser Ausführung wird der Kolben 7 vom Abgasdruck selbstregelnd in die Stellung gedrückt, bei der ein ausreichendes Druckgefälle für die Umsetzung der Abgasenergie in mechanische Energie des Laufrades erzeugt wird. Die dafür erforderliche Öffnungscharakteristik des Kolbens 7 erhält man durch eine entsprechende Dimensionierung der Federn 12, die als einfache Schraubendruckfedern ausgebildet sind. Zur Erreichung gewünschter Federkennlinien stehen praktisch verschiedene Federbauarten zur Verfügung, wie Konusfedern, Federn mit veränderlicher Steigung oder Drahtstärke, weiche Tellerfedern, Blattfedern und dergleichen sowie Kombinationen derselben.

Regelkolben mit Kolbenringen, wie sie vorzugsweise verwendet werden, haben den Vorteil etwa gleichbleibender Reibung bei guter Dichtwirkung. Es sind aber auch ringförmige, am Gehäuse und Diffusor eingespannte Bälge mit entsprechendem Hub geeignet, wenngleich ihre Hubcharakteristik schwieriger vorauszuberechnen ist.

Die Kolbenverschiebung durch die Differenz aus dem Abgasdruck im Spiralenraum und dem Druck im Diffusor 3 erfolgt nur soweit, wie der Kolben 7 diese Wastegatekanäle 16 abdeckt, die im Diffusor 3 vorgesehen sind, also bei noch zulässigen Abgasdrücken im Eintrittsspiralenraum. Bei zu grossem Druck werden die Mündungen der Wastegatekanäle 16 freigegeben und die überschüssigen Abgase strömen in den Diffusor ein. Durch die Ejektorwirkung sinkt dabei der Druck im Diffusor und damit im hinteren Zylinderraum 14. Da aber durch die Wastegateströmung auch der Druck im Spiralenraum sinkt, bleibt auch die Druckdifferenz über dem Kolben 7 im wesentlichen gleich.

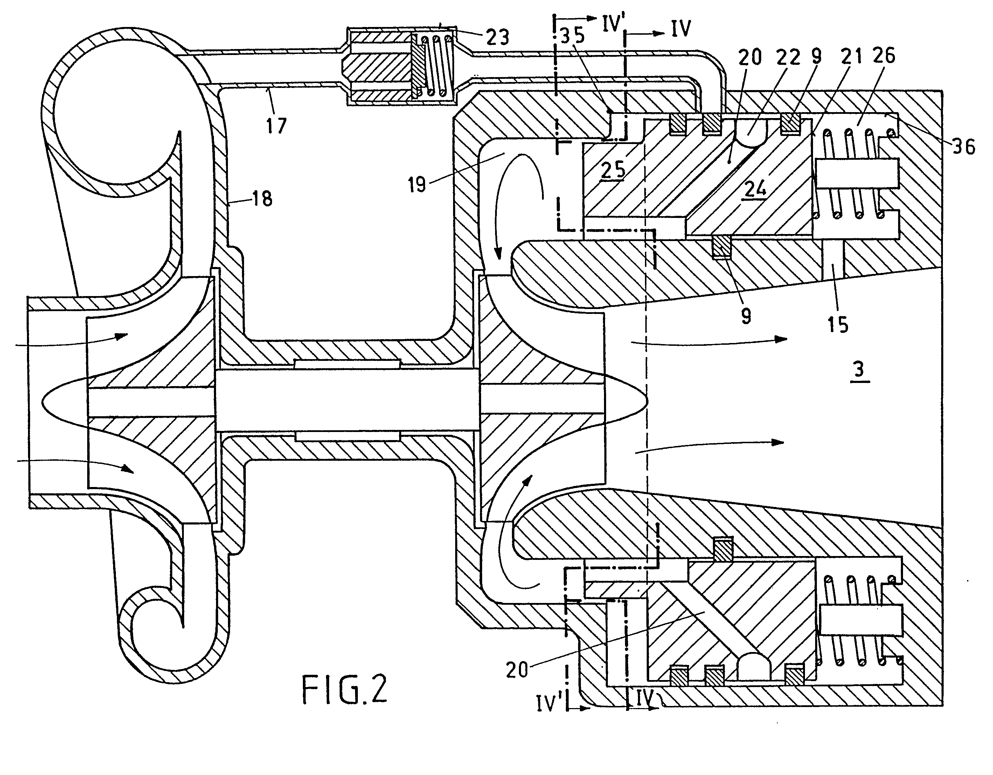

Die Fig. 2 zeigt eine Ausführung mit einer Bypassleitung 17, die bei kleinem Abgasstrom die Verdichterluftleitung des Verdichters 18 mit dem Eintrittsspiralenraum 19 über Bypasskanäle 20 im Regelkolben 21 verbindet, um ein Pumpen des Verdichters zu vermeiden. Die Kanäle 20 kommunizieren mit einer Ringnut 22, mit der die Bypassleitung 17 bei einem kleinen Abgasstrom in Verbindung kommt. In der Bypassleitung 17 kann ein Rückschlagventil 23 vorgesehen sein.

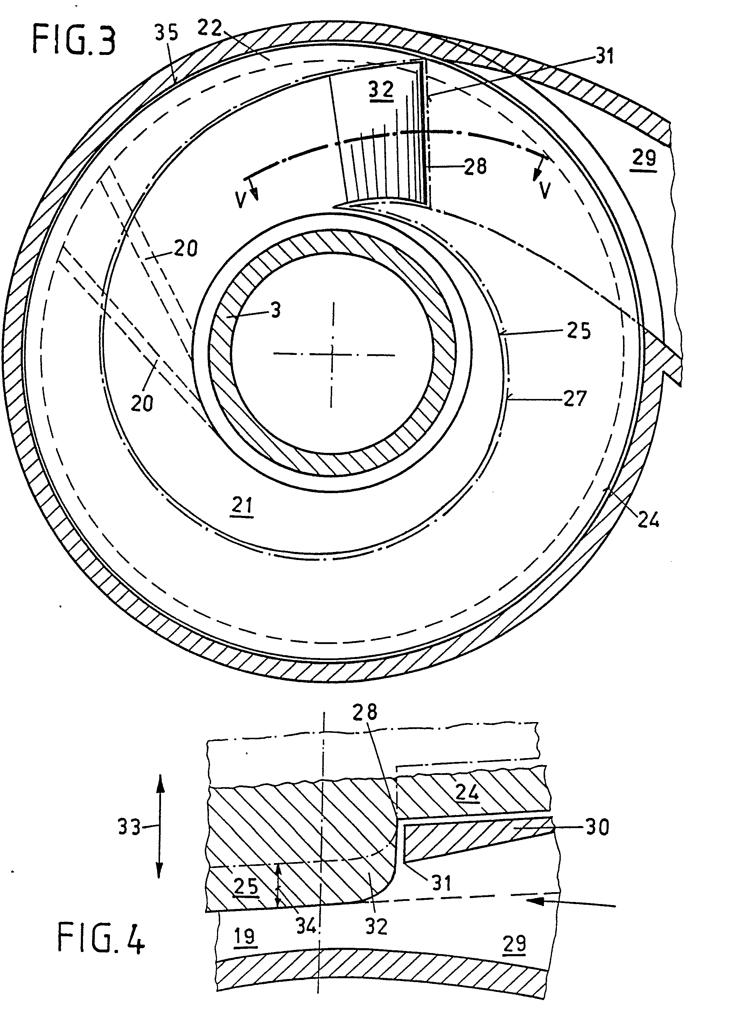

Die Fig. 3 ist eine Ansicht des Regelkolbens 21 und des Gehäuses senkrecht auf die in der Fig. 2 eingezeichneten Schnittverläufe, wobei jedoch keine maßstäbliche Zuordnung zur Fig. 2 besteht. Die voll ausgezogenen Linien der Fig. 3 beziehen sich auf den Schnitt IV–IV, während die strichpunktierte Linie den Querschnitt der inneren Begrenzung des Eintrittsspiralenraumes 19 gemäß dem Schnitt IV'–IV' darstellen. Der Schnitt durch die Bypassleitung 17 ist weggelassen, ebenso die Darstellung der Kolbenringe 9, 8 im Regelkolben bzw. Diffusor 3. Die Ringnut 22 des Bypasses und die Bypasskanäle 20 sind strichliert dargestellt.

Aus den Fig. 2 und 3 erkennt man, daß sich der Regelkolben 21 aus einem Kreiszylinderkörper 24 und einen Spiralkörper 25 zusammensetzt. Der Kreiszylinderkörper 24 nimmt die äußeren Kolbenring 9 auf, die gemeinsam mit dem Kolbenring 8 im Diffusor 3 den Eintrittsspiralenraum 19 gegenüber dem hinteren Zylinderraum 26 abdichtet. Außerdem enthält der Kreiszylinderkörper 24 die Ringnut 22 und die Kanäle 20 des Bypasses, von denen in Fig. 3 nur zwei stellvertretend für alle gleichmäßig über den Umfang verteilten Kanäle dargestellt sind.

Der strichpunktiert gezeigte Querschnitt 27 des Eintrittsspiralenraumes 19 verläuft mit einem kleinen Spiel parallel zum Umriß des Regelkolbens bis zu einer scharfkantigen Hohlkehle 28 am Übergang des Spiralkörpers 25 in den Kreiszylinderkörper 24. Diese Hohlkehle könnte auch ohne weiteres mit größerem Radius ausgeführt werden. Ihre Lage erkennt man aus dem in Fig. 4 dargestellten Schnitt V–V von Fig. 3. Die Fortsetzung des Querschnittes 27 über die Hohlkehle 28 ist der Querschnitt des Einlaufstutzens 29. Die Scheidewand 30, siehe Fig. 4, ergibt sich aus der Durchdringung des Einlaufstutzens und der Eintrittsspirale mit dem zylindrischen Gehäuse für die Aufnahme des Regelkolbens. Die Kante 31 dieser Scheidewand 30 ist in Fig. 3, da dort weggeschnitte gedacht, ebenfalls strichpunktiert gezeichnet.

Der obere Auslauf des Spiralkörpers 25 wird von einer abgerundeten Nase 32 gebildet, um eine ablösungsfreie Einströmung der Abgase vom Einlaufstutzen 29 in den Eintrittsspiralenraum 19 zu gewährleisten. Der Doppelpfeil 33 gibt die Verschieberichtung und der Doppelpfeil 34 den möglichen Hub des Regelkolbens an.

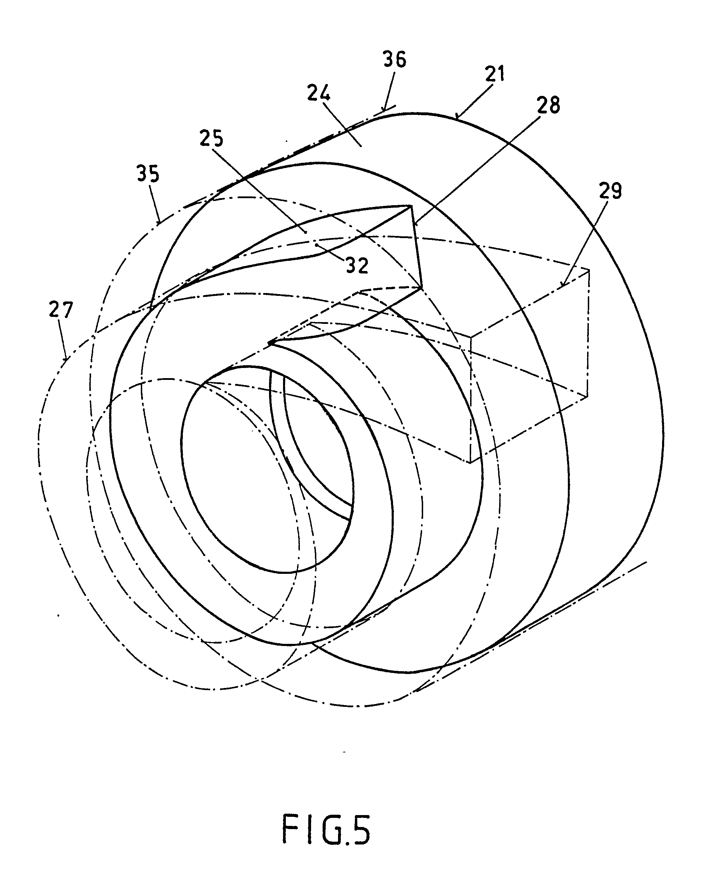

Die Fig. 5 zeigt in axonometrischer Darstellung voll ausgezogen die Grundform des Regelkolbens 21 und strichpunktiert die Grundform des Eintrittsspiralenraumes. Die Formelemente sind mit den gleichen Bezugszahlen wie in den Fig. 3 und 4 versehen. Der Kreis 35 ist die Umfangslinie der Bohrung 36 des Gehäuses für den Regelkolben 21 an der Übergangsebene in den Eintrittsspiralenraum 19 und ist in den Fig. 2 und 3 mit der gleichen Bezugszahl versehen.

Der Regelkolben könnte einstückig als Präzisionsgußteil hergestellt sein, wobei höchstens die äußere und die innere Kolbenlauffläche und die Kolbenringnuten spannend bearbeitet werden müßten. Falls der Regelkolben aus getrennten Teilen 24 und 25 hergestellt wird, so kommen für den Spiralkörper 25 scheibenförmige Abschnitte von gewalztem und gegossenem Stangenmaterial in Frage, die im wesentlichen nur an den Planflächen bearbeitet werden müssen.

Die Erfindung ist auch auf Axialturbinen anwendbar. Die Regelkolben unterscheiden sich dabei in ihrer Grundform von jenen für Radialturbinen in keiner Weise.

Neben der einwandfreien Abdichtungsmöglichkeit mit Kolbenringen oder auch mit einem Balg zeichnet sich die Erfindung besonders auch durch die Möglichkeit billiger Herstellung aus.

## Patentansprüche

1. Regulierbarer Abgasturbolader, dessen Abgasturbine (1 ÷ 3 + 10) mindestens ein in Richtung der Laufradwellenachse in einem Eintrittsspiralenraum (10; 19) verschiebbares Wandelement (25; 37) zur Änderung des Volumens und der Strömungquerschnitte des Eintrittsspiralenraumes (10; 19) für die Abgase des Motors aufweist und das verschiebbare Wandelement ein hohler Spiralzylinder (25; 37) ist, dessen Querschnitt im wesentlichen dem Querschnitt des Eintrittsspiralenraumes (10; 19) senkrecht zur Laufradwellenachse entspricht und in diesem spiralzylindrischen Teil des Eintrittsspiralenraumes geführt ist, sowie mit Federmitteln (12), die den Regelkolben (7; 21) in der Richtung zum Eintrittsspiralenraum (10; 19) belasten, dadurch gekennzeichnet, daß das Wandelement mit einem Regelkolben (7; 21), dessen Gestalt im wesentlichen ein Kreisringzylinderkörper (24; 43) ist, eine bauliche Einzheit bildet, wobei der Regelkolben (7; 21) mindestens in einer kreisringzylindrischen Bohrung (5; 36) des Turbinengehäuses (1) geführt ist, und daß ein Bypasskanal (17) vorhanden ist, der die Druckseite des Verdichters (18) mit dem Eintrittsspiralenraum (19) der Turbine verbindet, wobei die Bypassleitung (17) in die Bohrung für den Regelkolben (21) einmündet und im Regelkolben (21) eine Ringnut (22) und Bypasskanäle (20) vorhanden sind, die diese Ringnut (22) mit dem Eintrittsspiralenraum (19) verbinden.

2. Turbolader nach Anspruch 1, gekennzeichnet durch Wastegatekanäle (16) im Mantel eines Auslaßdiffusors (3), wobei die Wastegatekanäle (16) den Eintrittsspiralenraum (10) mit dem Auslaßdiffusor (3) verbinden, wobei die Eintrittsquerschnitte der Wastekanäle (16) am Auslaßdiffusor (3) derart angeordnet sind, daß die dem Turbinenlaufrad (2) zugewandte, kreisförmige Bohrungskante der den Auslaßdiffusor (3) umgebenden Bohrung des Regelkolbens (7) das Öffnen und Schließen der Eintrittsquerschnitte der Wastegatekanäle (16) in Abhängigkeit vom Abgasdruck vor dem Turbinenlaufrad (2) bewirkt.

## Claims

1. Controllable exhaust gas turbocharger, whose exhaust gas turbine (1 ÷ 3 + 10) has at least one wall element (25; 37) movable in the direction of the rotor shaft axis in an inlet volute space (10; 19) in order to alter the volume and the flow cross-section of the inlet volute space (10; 19) for the exhaust gases of the engine, and the movable wall element is a hollow spiral cylinder (25; 37) whose cross-section substantially corresponds to the cross-section of the inlet volute space (10; 19) normal to the rotor shaft axis and is guided in this spiral cylindrical part of the inlet volute space, and having spring means (12), which load the control piston (7; 21) in the direction towards the inlet volute space (10; 19) characterized in that, the wall element forms a structural unit with a control piston (7; 21) whose shape is substantially an annular ring-cylindrical body (24; 43), the control piston (7; 21) being guided at least in an annular ring-cylindrical bore (5; 36) of the turbine casing (1), and in that there is a bypass duct (17), which connects the compression side of the compressor (18) with the inlet volute space (19) of the turbine, the bypass pipe (17) opening out into the bore for the control piston (21) and there being in the control piston (21) an annular groove (22) and bypass ducts (20), which connect this annular groove (22) with the inlet volute space (19).

2. Turbocharger according to Claim 1, characterized by waste gate ducts (16) on the outside of an outlet diffuser (3), the waste gate ducts (16) connecting the inlet volute space (10) with the outlet diffuser (3) the inlet corss-sections of the waste ducts (16) being arranged on the outlet diffuser (3) in such a way that the circular bore edge, facing the turbine rotor (2), of the bore of the control piston (7) surrounding the outlet diffuser (3) effects the opening and closing of the inlet cross-sections of the waste gate ducts (16) as a function of the exhaust pressure ahead of the turbine rotor (2).

**Revendications**

1. Turbocompresseur réglable à gaz d'échappement, dont la turbine à gaz d'échappement (1 ÷ 3 + 10) comporte au moins un élément de paroi (25; 37), qui est déplaçable dans la direction de l'axe de l'arbre de rotor dans une chambre d'entrée (10; 19) de forme spirale et sert à modifier le volume et la section transversale d'écoulement dans cette chambre pour les gaz d'échappement du moteur, et l'élément de paroi mobile est un cylindre spiral creux (25; 37), dont la section transversale correspond sensiblement à la section transversale de la chambre spirale d'entrée (10; 19) et est guidée dans cette partie de forme cylindrique spirale de cette chambre spirale d'entrée, ainsi que des moyens en forme de ressorts (12), qui repoussent le piston de réglage (7; 21) en direction de la chambre spirale d'entrée (10; 19), caractérisé en ce que l'élément de paroi forme, avec un piston de réglage (7; 21), dont la forme est sensiblement celle d'un corps cylindrique en forme d'anneau circulaire (24; 43), une unité de construction, le piston de réglage (7; 21) étant guidé au moins dans un alésage cylindrique en forme d'anneau circulaire (5; 36) du carter (1) de la turbine, et qu'il est prévu un canal de dérivation (17), qui relie le côté refoulement du compresseur (18) à la chambre spirale d'entrée (19) de la turbine, la conduite de dérivation (17) débouchant dans l'alésage logeant le piston de réglage (21), tandis qu'il est prévu, dans le piston de réglage (21), une gorge annulaire (22) et des canaux de dérivation (20), qui relient cette gorge annulaire (22) à la chambre spirale d'entrée (19).

2. Turbocompresseur selon la revendication 1, caractérisé par des canaux d'échappement (16) ménagés dans l'enveloppe d'un diffuseur de sortie (3), les canaux d'échappement (16) reliant la chambre spirale d'entrée (10) au diffuseur de sortie (3), et les sections transversales d'entrée des canaux d'échappement (16) étant disposées dans le diffuseur de sortie (3) de telle sorte que le bord circulaire, tourné vers le rotor de turbine (2), de l'alésage, qui entoure le diffuseur de sortie (3), et loge le piston de réglage (7), réalise l'ouverture et la fermeture des sections transversales d'entrée des canaux d'échappement (16) en fonction de la pression des gaz d'échappement en amont du rotor (2) de la turbine.

FIG.1

FIG.2

EP 0 081 255 B1

**FIG.3**

35  22  31

32

28

V↓    V↓

29

20

3

20    25

20    27

21    24

28

33

24

30

25

31

**FIG.4**    19    34    32    29

FIG.5